# EUROPÄISCHE PATENTSCHRIFT

(11) **EP 1 322 694 B1**
(45) Veröffentlichungstag und Bekanntmachung des Hinweises auf die Patenterteilung: **07.12.2005**
(21) Anmeldenummer: 01982345.9
(22) Anmeldetag: 24.09.2001
(51) Int. Cl.: C08G 69/16, C08G 69/18, C08G 69/02, C08G 69/08, C08G 69/14

(54) **VERFAHREN ZUR VERMINDERUNG DES CAPROLACTAMGEHALTES VON POLYAMID 6, EIN POLYAMID 6 UND DESSEN VERWENDUNG**
METHOD FOR REDUCING THE CAPROLACTAM CONTENT OF POLYAMIDE 6, A POLYAMIDE 6 AND USE THEREOF
PROCEDE POUR DIMINUER LA TENEUR EN CAPROLACTAME DU POLYAMIDE 6, UN POLYAMIDE 6 ET SON UTILISATION

(30) Priorität: 26.09.2000 DE 10047657
(43) Veröffentlichungstag der Anmeldung: 02.07.2003
(73) Patentinhaber: BASF Aktiengesellschaft, 67056 Ludwigshafen (DE)
(72) Erfinder: GÄHR, Frank, 73730 Esslingen (DE); HERMANUTZ, Frank, 71229 Leonberg (DE); PECZYNSKI, Mirko, 83727 Schliersee (DE)
(86) Internationale Anmeldenummer: PCT/EP2001/011025
(87) Internationale Veröffentlichungsnummer: WO 2002/026865

(56) Entgegenhaltungen:
- FR-A- 1 574 077
- US-A- 3 239 490
- US-A- 3 578 640
- US-A- 3 879 354
- US-A- 5 169 582

## Beschreibung

Die Erfindung betrifft ein Verfahren zur Verminderung des Caprolactamgehaltes von Polyamid 6, erhältlich insbesondere durch hydrolytische Polymerisation von epsilon-Caprolactam, ein danach hergestelltes Polyamid 6 und die Verwendung desselben.

Zur großtechnischen Herstellung von Polyamid 6 wird epsilon-Caprolactam in der Schmelze unter Zusatz von Wasser oder wasserabgebenden Stoffen polymerisiert. Der erste Schritt ist die Hydrolyse eines Teils des Caprolactams zur freien Säure. Diese Initiierung kann durch Zugabe von 6,6-Salz (Hexamethylen-diammoniumadipat), alpha-omega-Aminocarbonsäuren, Säure/Alkohol-Gemischen oder anderen Verbindungen beschleunigt werden. Die freie Aminosäure kann dann Caprolactam addieren oder unter Abspaltung von Wasser polykondensieren. Demzufolge werden drei Hauptreaktionen beobachtet: die Ringöffnung des Lactams durch Wasser, die Polyaddition des Lactams an die gebildete freie Säure und die Polykondensation der Aminocarbonsäure. Ferner finden Umamidierungen statt, die die Einstellung des Verteilungsgleichgewichtes beschleunigen. Die für den Umsatz an Lactam maßgebende Reaktion ist die Polyaddition des Lactams an die Aminogruppe der wachsenden Polymerkette. Diese Reaktion verläuft um Größenordnungen schneller als die eigentliche Polykondensationsreaktion. Der Lactamumsatz bei der Polymerisation wird durch den Lactamanbau an Endgruppen dominiert; der Lactameinbau in Kettenamidgruppen ist von geringer Bedeutung. Die Polyaddition erfolgt an der Aminogruppe, während die Carboxylendgruppen reaktionsträger sind und nur mit geringer Reaktionsgeschwindigkeit durch Kondensation mit Aminogruppen reagieren. Hohe Konzentrationen an Amin- und Carboxylgruppen erhöhen die Geschwindigkeit, mit der sich das Polyadditionsgleichgewicht einstellt.

Mit fortschreitender Reaktionszeit wird ein Gleichgewichtspolymerisat erreicht, das in Abhängigkeit von Temperatur, Initiatormenge und Wassergehalt 7 bis 12 Gew. % monomeres Caprolactam enthält. Nach Reimschüssel (J. Polym. Sci. Macromol. Rev. 12 (1977), 65) beträgt die Gleichgewichtskonzentration von Caprolactam bei 250°C 7,8 % , die des cyclischen Dimeren 1,13%, des Trimeren 0,8% und des Tetrameren 0,6%. Die Gleichgewichtskonzentration von Caprolactam sinkt tendenziell mit der Temperatur und dem Wassergehalt. Bei 250°C und 1 Mol Wasser/mol Caprolactam beträgt der Gleichgewichtspolymerisationsgrad Pₙ = 300. Bei 6 Mol Wasser/mol Caprolactam reduziert sich Pn auf 100. Vor der Weiterverarbeitung wird das monomere Lactam entweder durch Extraktion (Waschen des Granulats mit Wasser) oder durch Vakuum bis auf einen Restgehalt von üblicherweise 0,5 - 1,1 Gew. % entfernt. Ebenso entfernt man einen erheblichen Teil des Gleichgewichtswassers. Ein so vorbehandeltes Produkt, das aus dem Gleichgewichtszustand gebracht wurde, kehrt jedoch beim Aufschmelzen wieder in das Gleichgewicht zurück, d.h. der Monomergehalt wird steigen.

Smith (J. Polym. Sci. 30 (1958), 459) und Hermans (J. Polym. Sci. 16 (1955), 451) haben sich mit der Wiedereinstellung des Gleichgewichts und der Geschwindigkeit der Lactamrückbildung bei lactamfreiem Polyamid 6 beschäftigt. Nach ihren Ergebnissen ist das Produkt der Konzentrationen der Amino- und Carboxylendgruppen der Lactamrückbildungsgeschwindigkeit direkt proportional. Folglich erfolgt die Rückbildung des Caprolactams bevorzugt über die Polymerkettenenden durch Monomerabspaltung. Zur Erreichung einer geringen Rückbildungsgeschwindigkeit sollte deshalb die Zahl der freien Endgruppen möglichst klein sein. Den Einfluss der Temperatur auf die Caprolactamrückbildung beschreibt Klare (Synthetische Fasern aus Polyamid, Akademie Verlag, Berlin 1963). Demnach bilden sich bei den üblichen Verarbeitungstemperaturen von 280° bis 290°C schon innerhalb weniger Minuten mehr als 2% niedermolekulare Anteile. Im Temperaturbereich von 230° bis 240°C sind die Polyamid 6-Schmelzen wesentlich stabiler. Hier wird während 10 Minuten sehr wenig und während 30 Minuten ca. 0,5 % Monomeres rückgebildet.

Die im Vergleich zu anderen Polymeren, trotz der beschriebenen Extraktionsverfahren, sehr hohen Monomergehalte bei Polyamid 6 verursachen in Weiterverarbeitungsschritten erhebliche Probleme. So enthalten handelsübliche Polyamid 6-Garne 0,5 bis 1 Gew. % des Monomeren epsilon-Caprolactam. Bei der Rohwarenfixierung von Polyamidgeweben, die bei 180 bis 200°C durchgeführt wird, werden hiervon, aufgrund des hohen Dampfdrucks des Caprolactams, bis zu 50% emittiert. Caprolactamgehalte in der Abluft von 2 bis 6 g pro Kilogramm im Textilbetrieb verarbeiteter Polyamid 6-Ware sind somit keine Seltenheit. Die diesbezüglich geltenden Emissionsgrenzwerte in der Abluft werden um etwa das 10 fache überschritten. Die Hersteller von Polyamid 6 stehen daher vor dem Problem, Polyamid 6-Typen mit verringerter Caprolactamfreisetzung herzustellen, zumal Caprolactam 1997 hinsichtlich seiner Schädlichkeit in der MAK-Liste in Klasse 1 eingestuft wurde.

Es hat sich gezeigt, dass es durch rein technologische Optimierungen bestehender Prozesse und Verarbeitungsschritte nicht möglich sein wird, die zur Einhaltung der Grenzwerte notwendige Reduzierung der Caprolactamgehalte um einen Faktor von etwa 10 zu erreichen. Das Reduzierungspotential wird diesbezüglich von den Polyamid 6-Herstellern auf lediglich 10 bis 20% geschätzt. Um eine signifikante Reduktion des Caprolactamgehaltes bei Polyamid 6 zu erzielen, kommt daher nur die gezielte Zugabe bestimmter Additive in Frage, d.h. eine chemische Modifizierung des Polyamids. Praxisrelevante Polyamid 6-Modifizierungen für den Fasersektor werden vorwiegend im Hinblick auf die Viskositätsstabilisierung und die Anfärbbarkeit durchgeführt. Gewöhnlich werden Polyamide mit Säurefarbstoffen im schwach sauren Medium gefärbt, wobei die freien Aminoendgruppen in Form von Ammoniumgruppen vorliegen. Sulfogruppenhaltige, im Färbemedium anionisch vorliegende Farbstoffe, wobei vor allem Säurefarbstoffe zu nennen sind, werden über ionische Wechselwirkungen an der Polyamidfaser gebunden. Je mehr Aminoendgruppen ein Polyamidfasermaterial enthält, desto mehr anionischer Farbstoff kann bis zur adsorptiven Sättigungsgrenze (Langmuir-Isotherme) gebunden werden.

Aus der einschlägigen Fachliteratur sind nur wenige Arbeiten bekannt, die sich der Aufgabe widmen, Polyamidmodifizierungen mit dem Ziel verringerter Monomergehalte durchzuführen. Die DE-C-1 130 592 beschreibt, dass bei einer wasserfreien Polyamid 6-Synthese, die durch chlorwasserstoffsaure Aminsalze katalysiert wird, eine sehr geringe Lactamrückbildung erhalten werden kann. Dies wird auf das Fehlen von Carboxylgruppen zurückgeführt. Dieses Polymerisationsverfahren wurde entwickelt, um Polyamide mit stabiler Molekülgröße herzustellen. Es wurde technisch nicht umgesetzt. Die US-A-4,574,054 beschreibt ein Polymerisationsverfahren, bei dem der Caprolactamgehalt des Polymers und der Fasern signifikant verringert ist. Dies wurde durch den Einsatz eines bestimmten Systems der Molekulargewichtsregulierung und durch Anwendung eines etwas komplizierteren Polymerisationsprozesses erreicht. Es ist weiterhin bekannt, dass es durch Erhöhung des mittleren Molekulargewichts des Polyamid 6, beispielsweise durch Nachkondensation, möglich ist, Polyamid 6 mit geringerem Gehalt an Caprolactam zu erhalten. Diese Maßnahme ist jedoch sehr teuer, und sie ist des weiteren begleitet von einer deutlichen Zunahme der relativen Schmelz- und Lösungsviskosität.

Aufgabe der vorliegenden Erfindung ist es, Polyamid 6-Typen für Fasern und Formmassen herzustellen, deren Caprolactamgehalte wesentlich unter denen des heute am Markt befindlichen Polyamid 6 liegen. Hierbei müssen sowohl die Caprolactamgehalte am Ende der Polymerisation als auch die bei hohen Temperaturen beobachtbare Caprolactamrückbildung bei der thermoplastischen Verarbeitung in der Schmelze drastisch reduziert werden. Die neuen Polyamid 6-Typen müssen hierbei ohne wesentliche Abänderung der gängigen Polymerisationstechniken herstellbar sein, insbesondere müssen die zuzusetzenden Additive kostengünstig sein, so dass die Produkte vom Preis her den üblichen Polyamid 6-Typen vergleichbar sind. Die Lösungsviskositäten der neuen Polyamid 6-Typen sollen vergleichbar sein mit jenen von standardgemäß hergestelltem Polyamid 6, wobei insbesondere auf den Schritt der Nachkondensation verzichtet werden soll. Gemäß einer weiteren Aufgabe sollte es das Verfahren auch ermöglichen, Polyamid 6-Typen herzustellen, die im Weiterverarbeitungsverhalten und insbesondere in ihren färberischen Eigenschaften keine Probleme aufwerfen.

Diese Aufgabe wird erfindungsgemäß dadurch gelöst, dass ein unter Hitzeeinwirkung Isocyansäure bildendes Additiv herangezogen wird, wobei das Additiv oder extern unter Hitzeeinwirkung aus dem Additiv gebildete Isocyansäure a) zur Polymerisation oder b) zu einer Schmelze von Polyamid 6 zugegeben wird.

Anhand der Erfindung können Polyamid 6-Typen hergestellt bzw. Polyamid 6 behandelt werden, wobei entsprechende gängige Herstellungsverfahren bzw. Ausgangsmaterialien genutzt wurden, um das Erfindungsziel zu erreichen. Bei der Maßnahme a) wird das Additiv bzw. die extern gebildete Isocyansäure zur Polymerisation gegeben, wobei das Polyamid 6 insbesondere durch hydrolytische Polymerisation von epsilon-Caprolactam erhalten wird. Bei der Maßnahme b) wird ein handelsübliches Polyamid 6, das beispielsweise in Schnitzel-, Chip- oder Granulatform vorliegen kann, aufgeschmolzen. Hierbei schließt der Begriff "handelsüblich" eine erfolgte Extraktionsmaßnahme, beispielsweise in Form einer Extraktion mit Wasser oder in Form von Unterdruck, ein; das in Maßnahme b) zum Einsatz kommende handelsübliche Polyamid 6 weist demnach die diesen Handels-Polyamid 6-Produkten üblicherweise anhaftenden Gehalte an epsilon-Caprolactam von 0,5 bis 1,1 Gew.-% auf. Dieses Polyamid 6 wird aufgeschmolzen und das Additiv bzw. die extern gebildete Isocyansäure der Schmelze zugefügt.

Besonderes Kennzeichen des Additivs ist es, dass es bei der Verwirklichung der Erfindung unter Hitzeeinwirkung Isocyansäure bildet. Dabei bildet sich die Isocyansäure im Verlauf der Polymerisation bzw. innerhalb der Schmelze durch thermische Zersetzung von insbesondere Harnstoff, Kondensationsprodukten des Harnstoffs, insbesondere Biuret, Triuret und Cyanursäure, sowie anderen Harnstoffderivaten und/oder oligomeren oder polymeren Harnstoffverbindungen, die unter Einwirkung thermischer Energie Isocyansäure freisetzen. Beispielhaft können hier erwähnt werden Silylcarbamat, Trimethylsilylcarbamat, Trimethylsilylharnstoff, Poly-(nonamethylen)harnstoff.

Auch kann die Isocyansäure aus bezeichneten Ausgangsmaterialien extern durch thermische Zersetzung gebildet werden. Hierbei kann die Zersetzung auch durch Energieeintrag über elektromagnetische Strahlung ausgelöst werden. Diese extern gebildete Isocyansäure wird dann der Polymerisation oder der Schmelze von Polyamid 6 zugegeben.

Während der Polymerisation des epsilon-Caprolactams, in weitestem Sinne, insbesondere während der sich einstellenden Gleichgewichtsphase, werden demzufolge Additive zugesetzt, die unter Hitzeeinwirkung Isocyansäure bilden. Diese reagiert bereitwillig mit Substanzen, die Hydroxylgruppen, Carboxylgruppen oder Aminogruppen enthalten. Im Falle von Alkoholen bilden sich Carbamate, mit Carbonsäuren Kohlensäureamidderivate und mit Aminen Derivate des Harnstoffs.

Harnstoff zersetzt sich oberhalb seines Schmelzpunktes von 132,7°C zu Isocyansäure und Ammoniak. Demgegenüber tritt bei der Zersetzung von Cyanursäure, die als cyclisches Trimeres der Isocyansäure betrachtet werden kann, unter geeigneten Bedingungen fast ausschließlich Isocyansäure auf. Allerdings ist die Zerfallstemperatur der Cyanursäure mit >300°C sehr hoch. Reaktionen der Isocyansäure spielen in der Technik vor allem bei der Herstellung von Cellulosecarbamat oder von Polyharnstoffen eine Rolle. Die Herstellung des Polyharnstoffes 6D1 erfolgt zum Beispiel durch Polymerisation von Hexamethylendiamin und Harnstoff. Grundlagen und Probleme der Polymerisation werden in der GB 981,813 sowie der US-A-3,329,653 beschrieben. So wird angenommen, dass die Reaktion, wie oben skizziert, über die thermische Zersetzung des Harnstoffs abläuft und die entstehende Isocyansäure mit den Aminoradikalen der Diaminkomponente reagiert. Aus der Diaminkomponente entstehen somit Harnstoffradikale, die zu Isocyanaten pyrolysieren, welche wiederum mit Aminoradikalen rekombinieren können. Die entstehende Additionsverbindung reagiert weiter, so dass bei der Additionsreaktion immer längere Ketten gebildet werden. Als Nachteil wird angeführt, dass bei den hohen Temperaturen der Polyharnstoffsynthese die intermediär auftretende Isocyansäure bzw. entstehende Isocyanate nicht ausschließlich mit den primären Aminogruppen am Kettenende des Additionspolymers reagieren, sondern ebenfalls mit Kettenamidgruppen. Als Folge werden Vernetzungen erhalten, die zu einem nicht mehr thermoplastischen Produkt führen, so dass sich der Polyharnstoff nicht mehr unzersetzt aufschmelzen lässt. In den zitierten Patentschriften findet sich jedoch kein Hinweis darauf, dass die Reaktion zwischen Harnstoff (sowie der dort zitierten Harnstoffderivate) und entsprechenden diprimären Diaminen analog auch mit Lactamen durchführbar ist. Weiterhin zielen die in den beiden Patenten beanspruchten Erfindungen nicht, wie in der vorliegenden Erfindung beschrieben, auf Polyamidtypen vom AB-Typ, sondern auf die Herstellung von Polyharnstoffen.

Überraschenderweise wurde nun gefunden, dass Isocyansäure, welche aus Harnstoff oder anderen vorstehend bezeichneten Harnstoffderivaten intermediär erzeugt werden kann, auch zur Modifizierung von Polyamiden des AB-Typs geeignet ist. Hierzu werden vor, während oder im Anschluss an die Polyaddition geringe Mengen an Additiv, wie insbesondere Harnstoff oder Biuret, zugemischt. Da der Kettenabbau im Polyamid 6 vorwiegend über die Kettenenden abläuft, ist es vorteilhaft, die geeigneten Isocyansäure freisetzenden Additive oder die extern gebildete Isocyansäure erst gegen Ende der Polymerisation in der sogenannten Gleichgewichtsphase zuzugeben, so dass ein guter und ungehinderter Polymeraufbau durch ringöffnende Polymerisation des Caprolactams erfolgt, um die Bulkeigenschaften des Polyamid 6 weitgehend zu erhalten. Die sich unter den üblichen Polymerisationstemperaturen aus insbesondere Harnstoff bildende Isocyansäure reagiert vorwiegend mit den Endgruppen der Polymerketten. Ein solchermaßen hergestelltes modifiziertes Polyamid 6 weist erstens weniger Monomergehalte auf und zweitens wird, sofern Caprolactam aus einem solchermaßen hergestellten Polyamid durch Wasser extrahiert wurde, beim erneuten Aufschmelzen Caprolactam langsamer zurückgebildet. Ein weiterer Vorteil sind die niedrigeren Schmelzeviskositäten der modifizierten Polyamid 6-Typen. Die Extrusion der Schmelze kann somit bei geringerer Temperatur als beim unmodifizierten Polyamid 6 durchgeführt werden. Aufgrund der niedrigeren Temperaturen sinkt, bei gleicher Verweilzeit beispielsweise in einem Extruder, die Geschwindigkeit der Caprolactamrückbildung in der Schmelze erheblich.

Die zuzusetzende Menge einer oder mehrerer der genannten Additive bzw. extern gebildeter Isocyansäure kann im Vergleich zur Menge des eingesetzten Monomeren epsilon-Caprolactam gering gehalten werden, insbesondere bei 0,01 bis 10 Gew. %, wobei 0,1 bis 3 Gew. % besonders bevorzugt sind. Dies hat den Vorteil, dass Vernetzungen zwischen Polymerketten nicht auftreten oder so gering sind, dass das Verarbeitungsverhalten der erfindungsgemäß hergestellten Polyamid 6-Typen nicht merkbar beeinflusst wird. Dies schließt jedoch nicht aus, dass auch Copolymere mit höherem Anteil an z.B. Harnstoff im Vergleich zum Lactamanteil hergestellt werden können. Die Herstellung solchermaßen modifizierter Polyamide ist diskontinuierlich wie auch kontinuierlich nach gängigen Polymerisationstechniken durchführbar. Erfindungsgemäß kann das Isocyansäure bildende Additiv, wie beispielsweise Harnstoff, vor, während oder nach der eigentlichen Polymerisation des epsilon-Caprolactams zugesetzt werden. Für einen kontinuierlichen Betrieb beispielsweise in einem VK-Rohr ist ein Zusatz in der Druckzone vorteilhaft.

Es kann aber auch ein unmodifiziertes, handelsübliches Polyamid 6, das beispielsweise in Schnitzel-, Chip- oder Granulatform vorliegt, aufgeschmolzen werden und das Isocyansäure bildende Additiv bzw. die extern gebildete Isocyansäure dieser Schmelze zugeführt werden. Vorteilhaft erfolgt dies beispielsweise in einem heizbaren Mischer, der vorzugsweise über eine Entgasungszone verfügt. Besonders bevorzugt wird es, wenn als Mischer ein Extruder, insbesondere ein Zweischneckenextruder, herangezogen wird. Vorzugsweise wird die Temperatur in dem Mischer bzw. der Maßnahme b) auf 210°C bis 300°C, insbesondere auf 230 bis 260°C, eingestellt. Das heißt, es herrschen ähnliche thermische Bedingungen, wie bei der Weiterverarbeitung eines nach Maßnahme a) erhaltenen Polyamid 6 zu Formgegenständen und Fasern mittels Schmelzextrusion. Die Mengen, die bei der Maßnahme b) an Additiv hinzugegeben werden, entsprechen den vorstehend im Zusammenhang mit der Maßnahme a) angegebenen Werten.

Die oben erläuterte Maßnahme a) wird vorzugsweise so gesteuert, dass der Gehalt an epsilon-Caprolactam im erhaltenen Polyamid 6 auf weniger als 7 Gew.-%, insbesondere weniger als 4 Gew.-%, eingestellt wird. Vorzugsweise wird der Gehalt des erfindungsgemäß erhaltenen Polyamids an epsilon-Caprolactam durch übliche Extraktionsmethoden auf das unter wirtschaftlichen Aspekten vertretbare Maß weiter vermindert werden. Die Extraktion kann insbesondere durch Behandlung des erfindungsgemäß nach Maßnahme a) hergestellten Polyamid 6 mit Heißwasser oder durch Abziehen des epsilon-Caprolactams mittels Unterdruck erfolgen. Ein besonderer Vorteil des nach Maßnahme a) hergestellten Polyamid 6 ist es, dass dieses im Anschluss an die vorstehend genannten Verfahren der Extraktion deutlich weniger epsilon-Caprolactam enthält als ein Standard-Polyamid 6. Es bereitet demnach keine Schwierigkeiten, das nach Maßnahme a) erhaltene Polyamid 6 unter dem Aspekt der Verfahrenswirtschaftlichkeit auf einen Gehalt an epsilon-Caprolactam von weniger als 0,5 Gew.-%, insbesondere weniger als 0,3 Gew.- % bezogen auf Polyamid 6 herzustellen.

Bevorzugte Varianten der Maßnahme a) ergeben sich aus nachstehend aufgeführten Beispielen 2 bis 6, um sehr geringe Gehalte an epsilon-Caprolactam im Polyamid 6 zu erreichen. Vorteilhaft ist insbesondere, dass ein erfindungsgemäß nach Maßnahme a) hergestelltes Polyamid 6 auf sehr geringe Restgehalte an epsilon-Caprolactam zu extrahieren ist, so dass die vom Gesetzgeber geforderten geringen Emissionswerte bei der späteren Verarbeitung unterschritten werden können. Dies war mit den herkömmlichen handelsüblichen Polyamid 6-Typen bislang nicht oder nur unter immensem technischen Aufwand möglich. Das wesentliche Ziel der Erfindung, die Verminderung des Gehaltes an epsilon-Caprolactam in Polyamid bei dessen Herstellung und Verarbeitung, ist somit erreicht.

Die erfindungsgemäß erhaltenen Polyamid 6-Typen lassen sich besonders vorteilhaft durch Schmelzextrusion zu beliebigen Produkten, insbesondere Formmassen und Fasern, weiterverarbeiten. Dabei wird vorzugsweise eine Verarbeitungstemperatur von 210 bis 300°C, insbesondere 230 bis 260°C eingehalten. Ein Vorgehen nach Maßnahme a) kann dazu genutzt werden, eine geringere Schmelzeviskosität einzustellen. Dies bedeutet, dass die Extrusion der Schmelze bei geringerer Temperatur erfolgen kann als bei handelsüblichem Polyamid 6. Gemäß einer besonders bevorzugten Variante des Verfahrens erfolgt die Schmelzextrusion bei 250°C und weniger. Dies führt zu dem Vorteil, dass die Rückbildung des epsilon-Caprolactams, für die die im Stand der Technik beschriebenen Gesetzmäßigkeiten gültig sind, langsamer stattfindet, so dass die erfindungsgemäß nach Maßnahme a) hergestellten Polyamid-Produkte, eine gleiche Konzentration des extrahierten Polyamid-Granulats vor der Extrusion vorausgesetzt, nach der Extrusion einen geringeren Gehalt an epsilon-Caprolactam aufweisen.

Vorteilhafterweise wird das erfindungsgemäße Verfahren unter Zugabe von für die Herstellung von Polycaprolactamen üblichen Zusatzstoffen wie OxidationsStabilisatoren, UV-Stabilisatoren, Pigmenten und/oder Farbstoffen durchgeführt.

Es konnte nicht erwartet werden, dass sich die färberischen Eigenschaften der nach dem erfindungsgemäß hergestellten Polyamid 6-Typen nur wenig von handelsüblichem Polyamid 6 unterscheiden. Überraschenderweise zeigen die erfindungsgemäß hergestellten Polyamid 6-Materialien keine direkte Korrelation des Aminoendgruppengehaltes mit den nach Säurefärbungen erhaltenen Farbtiefen. Im Gegensatz zu handelsüblichen light- bzw. deep-dye-Polyamid 6-Typen weichen die erhaltenen Farbtiefen nach Färbungen mit üblichen Säurefarbstoffen bei den nach erfindungsgemäß hergestellten Polycaprolactamen nur geringfügig ab von den bei unmodifiziertem Polyamid 6 erhaltenen Farbtiefen (s. Tabelle 1). Im Gegensatz dazu gibt es größere Abweichungen bei den Aminoengruppengehalten. Dieses Ergebnis ist sehr überraschend, da eine Korrelation der Farbtiefe mit den Aminoendgruppen bislang zum unbestrittenen Wissensstand der Säurefärbung von Polyamiden gehört.

Durch geeignete Zusätze, wie sie auch bei Polyamid 6 geläufig sind (z.B. Zugabe spezieller Diamine und/oder Triamine), können die Farbtiefen der erfindungsgemäß hergestellten Polyamid 6-Typen noch deutlich gesteigert werden (s. Beispiel 6).

Für den Faserbereich werden mit den erfindungsgemäß hergestellten Polyamid 6-Typen zumindest gleich gute mechanische Eigenschaften erhalten, wie für ein handelsübliches Standard-Polyamid 6; insbesondere betrifft dies die Faserfestigkeiten. Die erfindungsgemäßen Polyamid 6-Typen können verwendet werden für sämtliche Anwendungsgebiete, die auch für handelsübliches Polyamid 6 eine Rolle spielen. Hierzu zählen vor allem Fasern für textile und technische Zwecke, hieraus hergestellte Textilien und Teppiche, Formkörper bzw. Kunststoffteile, Beschichtungen aber auch Produkte aus dem Bereich der Klebetechnologie (Schmelzkleber), Filme, Gleitmittel, Filter und Adsorbentien.

Die Erfindung soll an folgenden Beispielen näher erläutert werden, wobei die darin angesprochenen chemischen und physikalischen Werte wie folgt ermittelt werden:
Lösungsviskosität: Die Bestimmung der relativen Lösungsviskosität ηᵣₑₗ wird nach ISO 307-1984 (E) bei 25°C in konzentrierter Schwefelsäure (96% puriss., Riedel-de-Haen) durchgeführt.
Schmelzeviskosität: Die Bestimmung der Schmelzeviskosität erfolgt an einem Rheometrix Dynamic Stress Rheometer DSR 500 unter Stickstoffatmosphäre. Gemessen wurde bei Temperaturen zwischen 230 und 260°C mit einer Kegel-Platte-Anordnung in Rotation. Der Durchmesser betrug 25 mm, der Spalt zwischen 0 und 0,0457 mm.
Aminoendgruppen: Die Bestimmung der Aminoendgruppen wurde potentiometrisch mit einem Titroprozessor (Fa. Metrohm) durchgeführt. 1 kg Phenol wird mit 429 g Methanol p.a. versetzt und leicht erwärmt. 50 ml dieser Lösung wird 1 g Polymergranulat zugefügt und unter Rückfluss 20 min lang erwärmt, bis die Lösung 90°C erreicht. Die Lösung wird mit einer 0,1 N Perchlorsäurelösung in Ethylenglykol titriert.
Carboxylendgruppen: Die Carboxylendgruppen wurden konduktometrisch bestimmt. 1 g Polymergranulat wird mit 50 ml Benzylalkohol versetzt und unter Rückfluss 30 min bei 180°C erhitzt. Es wird ein ständiger Stickstoffstrom durchgeleitet. Bei vollständiger Lösung des Polymers wird mit einer 0,1 N benzylalkoholischen Natronlauge titriert.
Faserfestigkeit: Das Kraft/Dehnungsverhaltens der Fasern wurde am Statimat M der Fa. Textechno nach DIN EN ISO 1421 durchgeführt.
Färbungen: Die Filamente wurden auf eine Restdehnung von 25% verstreckt und zu einem Strickschlauch verarbeitet. Die Strickware wurde 20 Sekunden bei 130°C in einem Spannrahmen fixiert und anschließend in einem Färbebecher (Polymat, Fa. Ahiba) mit C.I. Acid Red 158 gefärbt.
Färbeparameter:
   Färbekonzentration: 7,5%
   Flottenverhältnis: 1:40

### pH 4 (Essigsäure/Natriumacetat)

Von Raumtemperatur mit 1,5°C / min auf 60°C und dann weitere 100 min bei 60°C färben.

### Heiß auswaschen, kalt spülen.

Farbmetrische Bestimmung der Farbtiefe mit Spectraflash 500 (Fa. Datacolor) anhand des K/S-Wertes bei 590 nm.

### Beispiel 1 (Vergleichsbeispiel):

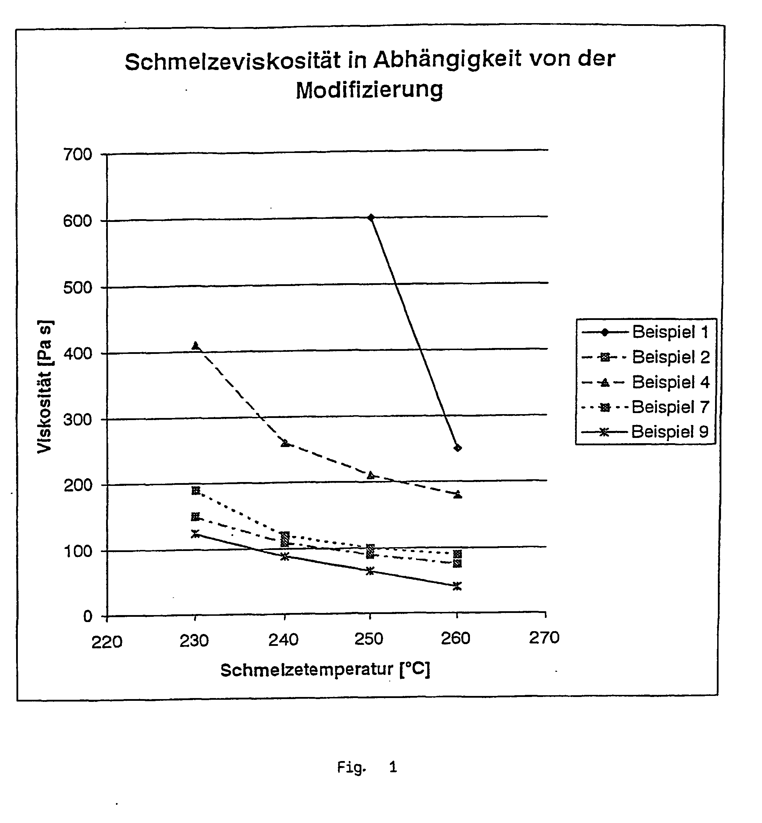

In einen 5 Liter-Autoklav mit Ölheizung und Rührwerk werden 1400 g ε-Caprolactam (12,38 mol) gegeben und zur Entfernung von Luftsauerstoff 5 mal bis auf 15 hPa evakuiert, wobei jeweils mit Stickstoff wieder belüftet wird. Danach wird das ε-Caprolactam unter Stickstoff aufgeschmolzen und noch 30 min bei 80°C weitergerührt. Anschließend werden 14,0 g entsprechend 1 Gew. % ε-Aminocapronsäure, 42,0 ml entsprechend 3 Gew. % bidestilliertes Wasser und 4,2 g entsprechend 0,3 Gew. % Benzoesäure zugesetzt. Der Autoklav wird vollständig verschlossen, während 2 Stunden auf 230°C und in weiteren 2 Stunden auf 245°C aufgeheizt. Bei dieser Temperatur wird die Polymerisation eine weitere Stunde fortgeführt, wobei sich ein Überdruck von etwa 4500 hPa einstellt. Der Überdruck wird dann vorsichtig abgelassen und die Temperatur nach dem Entspannen auf 260°C erhöht. Hierbei wird permanent Stickstoff durch die Apparatur geleitet. Nach 2,5 Stunden wird ein Drehmoment von 2,7 Nm erreicht. Das Reaktionsprodukt wird mittels Überdruck über ein 280°C heißes Bodenventil in eine mit Eiswasser gefüllte Rinne ausgetragen. Der Polymerstrang wird mit einem Wickler abgezogen und anschließend granuliert. Das Granulat wird 4 Stunden mit heißem Wasser bei einem Flottenverhältnis von 1:100 extrahiert. Vom wässrigen Extrakt wird der Caprolactamgehalt mittels Hochleistungsflüssigchromatographie (HPLC) bestimmt und auf die Granulatmasse berechnet. Es ergibt sich ein Caprolactamgehalt für dieses unmodifizierte Polyamid 6 von 7,81%. Das mit Heißwasser auf einen Restcaprolactamgehalt von < 0,07 % extrahierte Polyamid 6-Granulat wird mittels eines Blaschke-Extruders aufgeschmolzen und bei 260°C zu Fäden gesponnen. (Mittlere Verweilzeit im Extruder: 10 min). Die Fäden werden bei einem Flottenverhältnis von 1:100 mit Heißwasser extrahiert und der Caprolactamgehalt im wässrigen Extrakt mittels HPLC bestimmt und auf das Polyamid 6-Fasermaterial zurückgerechnet. Für die gesponnenen Polyamid 6-Fäden ergibt sich ein Gehalt an epsilon-Caprolactam von 0,59 Gew. %. Ein Verspinnen bei 240°C oder 230°C war, aufgrund der zu hohen Schmelzeviskosität (vgl. Abb. 1), nicht möglich.

### Beispiel 2:

Es wird wie analog Beispiel 1 verfahren, jedoch werden bei Erreichen eines Drehmoments von 2,7 Nm in der Nachpolymerisationsphase 14 g Harnstoff (entsprechend 1 Gew. %) zugesetzt und noch 10 min bei 260°C weitergerührt. Danach wird das erhaltene Reaktionsprodukt, wie in Beispiel 1 beschrieben, ausgetragen, granuliert und der Caprolactamgehalt mittels HPLC bestimmt. Das Polyamid 6 weist einen Gehalt an epsilon-Caprolactam von 3,6 Gew. % auf. Weitere Angaben zur relativen Lösungsviskosität, Schmelzeviskosität, Amino- und Carboxylendgruppen und Schmelzpunkt, die analog Beispiel 1 bestimmt wurden, sind Tabelle 1 zu entnehmen. Das Produkt löst sich in den für Polyamid 6 üblichen Lösemitteln wie z.B. Hexafluorisopropanol oder Trifluorethanol, d.h. es ist nicht vernetzt. Des weiteren lässt es sich unzersetzt aufschmelzen.

Das mit Heißwasser auf einen Restcaprolactamgehalt von <0,07% extrahierte Polyamid 6-Granulat wird mittels eines Extruders aufgeschmolzen (Verweilzeit 5 min) und bei 240 und 230°C zu Fäden gesponnen. Ein Verspinnen bei 260°C war, aufgrund der zu geringen Schmelzeviskosität (vgl. Abb.1), nicht möglich. Die Caprolactamgehalte der jeweils erhaltenen Spinnfäden, die Festigkeiten sowie die Farbtiefe (K/S-Wert) werden analog Beispiel 1 bestimmt und sind Tabelle 1 zu entnehmen.

### Beispiel 3

Es wird analog Beispiel 2 verfahren, wobei jedoch nur 0,003 Gew. % Benzoesäure als Kettenregler zugesetzt werden. Bei Erreichen eines Drehmoments von 6 Nm während der Polymerisation werden 14 g Harnstoff (entsprechend 1 Gew. %) zugesetzt und noch 60 Minuten bei 260°C weitergerührt und, wie in Beispiel 1 beschrieben, weiterverfahren. Das erhaltene Polyamid 6 weist einen Caprolactamgehalt von 1,20 Gew. % auf. Weitere Angaben zur relativen Lösungsviskosität, Schmelzeviskosität, Amino- und Carboxylendgruppen und Schmelzpunkt, die analog Beispiel 1 bestimmt wurden, sind Tabelle 1 zu entnehmen. Das mit Heißwasser auf einen Restcaprolactamgehalt von <0,07% extrahierte Polyamid 6-Granulat wird mittels eines Extruders aufgeschmolzen (Verweilzeit 5 min) und bei 260°C, 240°C und 230°C zu Fäden gesponnen. Die Caprolactamgehalte der jeweils erhaltenen Spinnfäden, die Festigkeiten sowie die Farbtiefe (K/S-Wert) werden analog Beispiel 1 bestimmt und sind Tabelle 1 zu entnehmen.

### Beispiel 4:

Es wird analog Beispiel 3 verfahren, wobei jedoch der Polymerschmelze bei Erreichen eines Drehmoments von 6 Nm lediglich 0,5 Gew. % Harnstoff zugesetzt werden. Das erhaltene Polyamid 6 weist einen Caprolactamgehalt von 2,81 Gew. % auf. Weitere Angaben zur relativen Lösungsviskosität, Amino- und Carboxylengruppen und Schmelzpunkt, die analog Beispiel 1 bestimmt wurden, sind Tabelle 1 zu entnehmen. Das mit Heißwasser auf einen Restcaprolactamgehalt von <0,07% extrahierte Polyamid 6-Granulat wird mittels eines Extruders aufgeschmolzen (Verweilzeit 5 min) und bei 260°C und 240°C zu Fäden gesponnen. Die Caprolactamgehalte der jeweils erhaltenen Spinnfäden, die Festigkeiten sowie die Farbtiefe (K/S-Wert) werden analog Beispiel 1 bestimmt und sind Tabelle 1 zu entnehmen.

### Beispiel 5

Es wird analog Beispiel 2 verfahren, jedoch ohne Zusatz von Benzoesäure als Kettenregler. Weiterhin werden 14 g Harnstoff (entsprechend 1 Gew. %) bereits zu Beginn zusammen mit der Aminocapronsäure zugesetzt. Anschließend wird die Polymerisation, wie in Beispiel 1 beschrieben, durchgeführt. Es wird nur eine relativ schwache Zunahme des Drehmoments beobachtet. Die Aufarbeitung des Polymerisats erfolgt analog Beispiel 1. Das erhaltene Polyamid 6 weist einen Caprolactamgehalt von 3,65 Gew. % auf. Weitere Angaben zur relativen Lösungsviskosität, Schmelzeviskosität, Amino- und Carboxylendgruppen und Schmelzpunkt, die analog Beispiel 1 bestimmt wurden, sind Tabelle 1 zu entnehmen. Das mit Heißwasser auf einen Restcaprolactamgehalt von <0,07% extrahierte Polyamid 6-Granulat wird mittels eines Extruders aufgeschmolzen (Verweilzeit 5 min) und bei 260°C, 240°C und 230°C zu Fäden gesponnen. Die Caprolactamgehalte der jeweils erhaltenen Spinnfäden, die Festigkeiten sowie die Farbtiefe (K/S-Wert) werden analog Beispiel 1 bestimmt und sind Tabelle 1 zu entnehmen.

### Beispiel 6

Es wird analog Beispiel 4 verfahren, jedoch werden bei Erreichen eines Drehmoments von 6,0 Nm neben 7 g Harnstoff (entsprechend 0,5 Gew. %) noch 0,5 Gew. % Hexamethylendiamin zugesetzt. Anschließend wird noch 10 min bei 260°C gerührt und das Polymerisat, wie in Beispiel 1 beschrieben, weiterverarbeitet. Das erhaltene Polyamid 6 weist einen Caprolactamgehalt von 1,48 Gew. % auf. Weitere Angaben zur relativen Lösungsviskosität, Schmelzeviskosität, Amino- und. Carboxylendgruppen und Schmelzpunkt, die analog Beispiel 1 bestimmt wurden, sind Tabelle 1 zu entnehmen. Das mit Heißwasser auf einen Restcaprolactamgehalt von < 0,05% extrahierte Polyamid 6-Granulat wird mittels eines Extruders aufgeschmolzen (Verweilzeit 5 min) und bei 260°C zu Fäden gesponnen. Die Caprolactamgehalte der jeweils erhaltenen Spinnfäden, die Festigkeiten sowie die Farbtiefe (K/S-Wert) werden analog Beispiel 1 bestimmt und sind Tabelle 1 zu entnehmen.

### Beispiel 7:

Es wird analog Beispiel 2 verfahren, wobei jedoch der Polymerschmelze bei Erreichen eines Drehmoments von 2,7 Nm 1 Gew. %. Biuret zugesetzt werden. Das erhaltene Polyamid 6 weist einen Caprolactamgehalt von 4,48 Gew. % auf. Weitere Angaben zur relativen Lösungsviskosität, Schmelzeviskosität, Amino- und Carboxylendgruppen und Schmelzpunkt, die analog Beispiel 1 bestimmt wurden, sind Tabelle 1 zu entnehmen. Das mit Heißwasser auf einen Restcaprolactamgehalt von <0,1% extrahierte Polyamid 6-Granulat wird mittels eines Extruders aufgeschmolzen (Verweilzeit 5 min) und bei 240°C und 230°C zu Fäden gesponnen. Die Caprolactamgehalte der jeweils erhaltenen Spinnfäden, die Festigkeiten sowie die Farbtiefe (K/S-Wert) werden analog Beispiel 1 bestimmt und sind Tabelle 1 zu entnehmen.

### Beispiel 8:

Es wird analog Beispiel 4 verfahren, wobei jedoch der Polymerschmelze bei Erreichen eines Drehmoments von 6 Nm 0,5 Gew. % Biuret zugesetzt werden. Das erhaltene Polyamid 6 weist einen Caprolactamgehalt von 1,34 Gew. % auf. Weitere Angaben zur relativen Lösungsviskosität, Schmelzeviskosität, Amino- und Carboxylendgruppen und Schmelzpunkt, die analog Beispiel 1 bestimmt wurden, sind Tabelle 1 zu entnehmen. Das mit Heißwasser auf einen Restcaprolactamgehalt von < 0,07 % extrahierte Polyamid 6-Granulat wird mittels eines Extruders aufgeschmolzen (Verweilzeit 5 min) und bei 260°C und 240°C zu Fäden gesponnen. Die Caprolactamgehalte der jeweils erhaltenen Spinnfäden, die Festigkeiten sowie die Farbtiefe (K/S-Wert) werden analog Beispiel 1 bestimmt und sind Tabelle 1 zu entnehmen.

### Beispiel 9:

Es wird jeweils analog Beispiel 2 verfahren, wobei der Polymerschmelze bei Erreichen eines Drehmoments von 2,7 Nm genau 1 Gew. % Cyanursäure zugesetzt werden. Die erhaltenen Caprolactamgehalte für die jeweils aus der Polymerisation erhaltenen Granulate und daraus analog Beispiel 1, jedoch bei 240°C und 230°C hergestellter Spinnfäden sind, ebenso wie die Zahl der Endgruppen, die Farbtiefen (K/S-Werte) und die Lösungsviskosität in Tabelle 1 dargestellt.

### Beispiele 10 bis 12 (Vergleichsbeispiele):

Es wird jeweils analog Beispiel 2 verfahren, wobei der Polymerschmelze bei Erreichen eines Drehmoments von 2,7 Nm in Beispiel 10 genau 1 Gew. % Sebacinsäure, in Beispiel 11 genau 1 Gew. % Hexamethylendiamin und in Beispiel 12 genau 1 Gew. % eines sterisch gehinderten Amins zugesetzt werden. Die erhaltenen Caprolactamgehalte für die jeweils aus der Polymerisation erhaltenen Granulate und daraus analog Beispiel 1, jedoch für variable Spinntemperaturen hergestellter Spinnfäden sind, ebenso wie die Zahl der Endgruppen, die Farbtiefen (K/S-Werte) und die Lösungsviskosität in Tabelle 1 dargestellt.

### Beispiel 13:

In einem zweistufigen VK-Rohr, bestehend aus Druck- und Entspannungszone, wird Caprolactam in Gegenwart von 0,5 Gew. % Harnstoff und 0,5 Gew. % Hexamethylendiamin (bezogen auf Caprolactamdurchsatz) bei ca. 270°C polymerisiert. Das zum Reaktionsstart erforderliche Wasser (0,5 Gew. %) sowie Harnstoff und Hexamethylendiamin werden in einem Seitenstrom der Druckstufe des VK-Rohres zugeführt. Der Caprolactamdurchsatz beträgt 10 kg/h. Die Verweilzeit in der Druckstufe beträgt 3,4 Stunden und in der Entspannungszone 16 Stunden. Das Polymerisat wird analog Beispiel 1 weiterverarbeitet.

Das Granulat weist einen Gehalt an epsilon-Caprolactam von 2,7 Gew. % auf. Das Granulat wird mittels eines Extruders aufgeschmolzen (Verweilzeit 5 min) und bei 260°C, 240°C bzw. 230°C zu Fäden gesponnen. Die Caprolactamgehalte der jeweils erhaltenen Spinnfäden, die Festigkeiten sowie die Farbtiefe (K/S-Wert) werden analog Beispiel 1 bestimmt und sind Tabelle 1 zu entnehmen.

### Beispiel 14 (Vergleichsbeispiel):

1 kg eines handelsüblichen, unmattierten Standard-Polyamid 6-Granulats wird auf einen Wassergehalt von weniger als 0,1 % getrocknet. Zum Verarbeiten des Granulats wird der zweiwellige Schneckenkneter ZSK 25 WLE der Fa. Krupp Werner & Pfleiderer eingesetzt, der über 2 Entgasungsgehäuse verfügt. Die Polymerschmelze wird über eine an den Extruder angeschlossene Spinndüse direkt zu Fasern verarbeitet, wobei die Temperatur zwischen 260°C und 240°C variiert wurde. Die Fasern werden mit einem Wickler bei 100 m/min abgezogen. Die Caprolactamgehalte der jeweils erhaltenen Spinnfäden, die Festigkeiten sowie die Farbtiefe (K/S-Wert) werden analog Beispiel 1 bestimmt und sind Tabelle 1 zu entnehmen.

### Beispiel 15:

Es wird analog Beispiel 14 verfahren, jedoch werden die getrockneten Granulate mehrmals mit einer Lösung aus 5 g Harnstoff in 100 ml Methanol möglichst gleichmäßig besprüht und getrocknet. Dies wird solange wiederholt bis die auf das Granulat aufgebrachte Harnstoffmenge 0,5 Gew. % beträgt. Aufgrund dieses oberflächlich abgelagerten Harnstoff Filmes sind keine realistischen Angaben zur relativen Lösungsviskosität, Schmelzeviskosität, Schmelzpunkt und Endgruppen möglich.

Das Granulat wird nochmals auf einen Wassergehalt von kleiner 0,1 % getrocknet und analog Beispiel 14 mittels des Zweischneckenextruders weiterverarbeitet, wobei die Spinntemperatur zwischen 260°C, 240°C und 230°C variiert wurde. Die Caprolactamgehalte der jeweils erhaltenen Spinnfäden, die Festigkeiten sowie die Farbtiefe (K/S-Wert) werden analog Beispiel 1 bestimmt und sind Tabelle 1 zu entnehmen.

Die Meßergebnisse der vorstehenden Beispiele sind in der nachfolgenden Tabelle 1 erfaßt.

**Tabelle 1:**

| Zusammenfassung der Messergebnisse für Beispiele 1-15 | | | | | | | | | | | |
|---|---|---|---|---|---|---|---|---|---|---|---|
| Beispiel Nr. | ηᵣₑₗ, (H₂SO₄) | η (260°C) [Pa s] | Tₘ [°C] | Amino-endgruppen [µval g⁻¹] | Carboxyl-endgruppen [µval g⁻¹] | CL Granulat [%] | CL Faser [%] Spinntemperaturen | | | Festigkeit [cN/tex] | K/S (590 nm) |
| | | | | | | | 260°C | 240°C | 230°C | | |
| 1* | 2,32 | 250 | 222,3 | 32,0 | 44,6 | 7,81 | 0,59 | a) | a) | 25.9 | 7,31 |
| 2 | 1,86 | 75 | 221,4 | 19,2 | 12,8 | 3,60 | b) | 0,13 | 0,11 1 | 34,7 | 5,64 |
| 3 | 2,22 | 85 | 221,4 | 23.6 | 13,0 | 1,20 | 0,11 | 0,03 | 0,00 | 52,7 | 6,88 |
| 4 | 2,46 | 180 | 222,5 | 14,1 | 6,3 | 2,81 | 0,08 | 0.02 | a) | 39,2 | 7,47 |
| 5 | 2,45 | 175 | 221,4 | 50,3 | 34,3 | 3,65 | 0,08 | 0,05 | 0,01 | 48,4 | 9,96 |
| 6 | 2,62 | 280 | 221,5 | 32,4 | 36.8 | 1,48 | 0,03 | a) | a) | 59.6 | 6,69 |
| 7 | 1,90 | 90 | 223,3 | 26,0 | 30,5 | 4,48 | b) | 0,02 | 0,02 | 48,2 | 3.36 |
| 8 | 2,49 | 210 | 220,6 | 26,4 | 33,1 | 1.34 | 0,03 | 0,01 | a) | 55,6 | 6,49 |
| 9 | 1.79 | 40 | 218,7 | 29,0 | 35,6 | 6,15 | b) | 0,18 | 0,32 | 26,6 | 7,12 |
| 10 * | 1.89 | 30 | 219,8 | 32,2 | 140,7 | 2,79 | b) | 0,28 | 0.41 | 35,1 | 7,82 |
| 11* | 1,97 | 40 | 219,4 | 58,0 | 33,8 | 2,70 | b) | 0,30 | 0,27 | 33,4 | 17,64 |
| 12* | 2,43 | 240 | 220.0 | 31,6 | 46,7 | 3,73 | 0.46 | a) | a) | 49,1 | 6,99 |
| 13 | 2,45 | 175 | 222,1 | 23,2 | 15,5 | 2,11 1 | 0,12 | 0.09 | 0.03 | 44,2 | 6,62 |
| 14* | 2,51 | 255 | 221,9 | 35,0 | 43,2 | k.A. | 0.88 | 0,39 | a) | 35,0 | 7,56 |
| 15 | k.A. | k.A. | k.A. | k.A. | k.A. | k.A. | 0,21 | 0,16 | 0,14 | 37,2 | 7,37 |

| | | | | | | | | | | | |
|---|---|---|---|---|---|---|---|---|---|---|---|
| *Vergleichsbeispiel | | | | | | | | | | | |

### Erläuterungen zu Tabelle 1:

ηrel: Relative Lösungsviskosität in 96%iger Schwefelsäure
η: Schmelzeviskosität gemessen bei 260°C
Tₘ: Schmelzpunkt [°C]
CL: Caprolactamgehalt [%], Granulat bzw. Faser ungewaschen
K/S: Farbtiefe für 7,5%ige Färbung mit C.I. Acid Red 158 bei 590 nm
a): aufgrund zu hoher Schmelzeviskosität nicht verspinnbar
b): aufgrund zu geringer Schmelzeviskosität nicht verspinnbar
k.A.: keine Angaben möglich

## Patentansprüche

1. Verfahren zur Verminderung des Gehaltes an epsilon-Caprolactam in Polyamid 6, erhältlich durch hydrolytische Polymerisation von epsilon-Caprolactam, **dadurch gekennzeichnet, dass** ein unter Hitzeeinwirkung Isocyansäure bildendes Additiv herangezogen wird, wobei das Additiv oder die extern unter Hitzeeinwirkung aus dem Additiv gewonnene Isocyansäure a) zur Polymerisation oder b) zu einer Schmelze von Polyamid 6 zugegeben wird.

2. Verfahren nach Anspruch 1, **dadurch gekennzeichnet, dass** als Isocyansäure bildendes Additiv Harnstoff, Biuret, Cyanursäure und/oder oligomere oder polymere Homologe des Harnstoffs verwendet werden.

3. Verfahren nach Anspruch 2, **dadurch gekennzeichnet, dass** die Isocyansäure extern durch thermische Zersetzung von Harnstoff, Biuret oder Cyanursäure erzeugt wird und der Polymerisation oder der Schmelze von Polyamid 6 zugeführt wird.

4. Verfahren nach einem der Ansprüche 1 bis 3, **dadurch gekennzeichnet, dass** das Additiv in einer Menge von 0,01 bis 10 Gew.-%, insbesondere von 0,1 bis 3 Gew.-% in 1a) bezogen auf die Menge an epsilon-Caprolactam bzw. in 1b) bezogen auf die Menge an Polyamid 6 zugesetzt wird.

5. Verfahren nach mindestens einem der Ansprüche 1 bis 4, **dadurch gekennzeichnet, dass** zusätzlich übliche Zusatzstoff, insbesondere Oxidations- und/oder UV-Stabilisatoren, Amine, Di- oder Triamine und/oder Farbmittel zugesetzt werden.

6. Verfahren nach mindestens einem der vorhergehenden Ansprüche, **dadurch gekennzeichnet, dass** die Maßnahme a) so gesteuert wird, dass der Gehalt an epsi-Ion-Caprolactam im Polyamid 6 auf weniger als 7 Gew.-% , insbesondere weniger als 4 Gew.-% , eingestellt wird.

7. Verfahren nach Anspruch 6, **dadurch gekennzeichnet, dass** der Gehalt an epsilon-Caprolactam durch übliche Extraktionsmethoden, insbesondere durch Wasserextraktion, oder durch Anwendung von Unterdruck vermindert wird.

8. Verfahren nach Anspruch 7, **dadurch gekennzeichnet, dass** der Gehalt des Polyamid 6 an epsilon-Caprolactam auf weniger als 0,5 Gew.-%, insbesondere weniger als 0.3 Gew.-% eingestellt wird.

9. Verfahren nach mindestens einem der Ansprüche 1 bis 5, **dadurch gekennzeichnet, dass** bei der Maßnahme 1b) die Schmelze aus einem Polyamid 6 bereitet wird und in einem Mischer vorliegt, in den das Additiv zudosiert wird, wobei eine erfolgte Extraktionsmaßnahme eingeschlossen ist.

10. Verfahren nach Anspruch 9, **dadurch gekennzeichnet, dass** als Mischer ein Extruder, insbesondere ein Zweischneckenextruder, herangezogen wird.

11. Verfahren nach mindestens einem der vorhergehenden Ansprüche, **dadurch gekennzeichnet, dass** ein extrahiertes Polyamid 6 durch Schmelzextrusion zu Fasern oder Formgegenständen verarbeitet wird.

12. Verfahren nach Anspruch 11, **dadurch gekennzeichnet, dass** die Temperatur der Schmelze auf 210 bis 300°C, insbesondere auf 230 bis 260°C, eingestellt wird.

13. Verfahren nach mindestens einem der vorhergehenden Ansprüche, **dadurch gekennzeichnet, dass** auf die Herstellung des Polyamid 6 nach Maßnahme a) zusätzlich noch eine Behandlung nach Maßnahme b) folgt.

14. Polyamid 6, erhältlich nach Maßnahme a) und mindestens einem der Ansprüche 1 bis 6 und **gekennzeichnet durch** einen Gehalt an epsilon-Caprolactam von weniger als 7 Gew.-%, insbesondere weniger als 4 Gew.-%.

15. Polyamid 6 erhältlich nach Anspruch 8 und **gekennzeichnet durch** einen Gehalt an epsilon-Caprolactam von weniger als 0,5, insbesondere weniger als 0,3 Gew.-%.

16. Polyamid 6, erhältlich nach mindestens einem der Ansprüche 9 bis 13, und **gekennzeichnet durch** einen Gehalt an epsilon-Caprolactam von weniger als 0,5 Gew.-%, insbesondere weniger als 0,3 Gew.-%.

17. Verwendung des Polyamid 6 nach Anspruch 15 zur Herstellung von Produkten durch Schmelzextrusion mit einem Gehalt an epsilon-Caprolactam von weniger als 0,5, insbesondere weniger als 0,3 Gew.-%.

18. Verwendung des Polyamid 6 nach Anspruch 16 in Form von Fasern, Fasermaterialien oder Formgegenständen.

19. Verwendung nach Anspruch 17 oder 18, wonach die Fasern oder Formgegenstände nach üblichen Verfahren der Schmelzextrusion bei einer Verarbeitungstemperatur von weniger als 250°C hergestellt werden.

## Claims

1. A method for reducing the level of epsilon-caprolactam in polyamide 6, obtainable via hydrolytic polymerization of epsilon-caprolactam, **characterized in that** an additive forming isocyanic acid under the effect of heat is employed, wherein the additive or the isocyanic acid, obtained externally from the additive under thermal effect, is added a) for purposes of polymerization or b) to a melt of polyamide 6.

2. Method according to claim 1, **characterized in that** by way of an isocyanic acid-forming additive, use is made of urea, biuret, cyanuric acid and/or oligomeric or polymeric homologues of urea.

3. Method according to claim 2, **characterized in that** the isocyanic acid is generated externally by thermal decomposition of urea, biuret or cyanuric acid and is added to the polymerization or to the melt of polyamide 6.

4. Method according to one of claims 1 to 3, **characterized in that** the additive is added in an amount of 0.01 to 10% by weight, in particular of 0.1 to 3% by weight, relative to the amount of epsilon-caprolactam in 1a) or relative to the amount of polyamide 6 in 1b).

5. Method according to at least one of claims 1 to 4, **characterized in that** customary additives are additionally added, in particular oxidation-and/or UV-stabilizers, amines, di- or triamines and/or coloring substances.

6. Method according to at least one of the preceding claims, **characterized in that** the measure a) is controlled in such manner that the content of epsilon-caprolactam in the polyamide 6 is adjusted to less than 7% by weight, in particular to less than 4% by weight.

7. Method according to claim 6, **characterized in that** the level of epsilon-caprolactam is reduced by customary extraction methods, in particular by water extraction or by application of low pressure.

8. Method according to claim 7, **characterized in that** the level of epsilon-caprolactam in polyamide 6 is adjusted to less than 0.5% by weight, in particular less than 0.3% by weight.

9. Method according to at least one of claims 1 to 5, **characterized in that** in measure 1b) the melt is prepared from a polyamide 6, and is present in a mixer into which is dosed-in the additive, wherein an executed extraction measure is included.

10. Method according to claim 9, **characterized in that** an extruder is used as mixer, in particular a two-screw extruder

11. Method according to at least one of the preceding claims, **characterized in that** an extracted polyamide 6 is processed, by melt extrusion, into fibers or molding objects.

12. Method according to claim 11, **characterized in that** the temperature of the melt is adjusted to 210 to 300°C, in particular to 230 to 260°C.

13. Method according to at least one of the preceding claims, **characterized in that** with respect to the production of polyamide 6 according to measure a) there takes place, in addition, a treatment according to measure b).

14. Polyamide 6 obtainable according to measure a) and at least one of claims 1 to 6, **characterized by** a level of epsilon-caprolactam of less than 7% by weight, in particular less than 4% by weight.

15. Polyamide 6 obtainable according to claim 8 and **characterized by** a level of epsilon-caprolactam of less than 0.5, in particular of less than 0.3% by weight.

16. Polyamide 6 obtainable according to at least one of claims 9 to 13, and **characterized by** a level of epsilon-caprolactam of less than 0.5% by weight, in particular less than 0.3% by weight.

17. Use of the polyamide 6 according to claim 15 for the manufacture of products by means of melt extrusion, with a content of epsilon-caprolactam of less than 0.5, in particular of less than 0.3% by weight.

18. Use of the polyamide 6 according to claim 16 in the form of fibers, fiber materials or molding articles.

19. Use according to claim 17 or 18, according to which the fibers or molding articles are produced according to traditional methods of melt extrusion at a processing temperature of less than 250°C.

## Revendications

1. Procédé pour réduire la teneur en epsilon-caprolactame dans du polyamide 6, qu'on peut obtenir par polymérisation par hydrolyse d'epsilon-caprolactame, **caractérisé en ce qu'**on fait intervenir un additif formant de l'acide isocyanique sous l'action de chaleur, l'additif ou l'acide isocyanique obtenu de manière externe à partir de l'additif sous l'action de chaleur étant ajouté a) à la polymérisation ou b) à une masse fondue de polyamide 6.

2. Procédé suivant la revendication 1, **caractérisé en ce que**, comme additif formant de l'acide isocyanique, on utilise de l'urée, du biuret, de l'acide cyanurique et/ou des homologues oligomères ou polymères de l'urée.

3. Procédé suivant la revendication 2, **caractérisé en ce que** l'acide isocyanique est produit de manière externe par décomposition thermique d'urée, de biuret ou d'acide cyanurique et est amené à la polymérisation ou à la masse fondue de polyamide 6.

4. Procédé suivant l'une des revendications 1 à 3, **caractérisé en ce que** l'additif est ajouté en une quantité de 0, 01 à 10% en poids, en particulier de 0,1 à 3% en poids, dans 1a) par rapport à la quantité d'epsilon-caprolactame ou respectivement dans 1b) par rapport à la quantité de polyamide 6.

5. Procédé suivant au moins l'une des revendications 1 à 4, **caractérisé en ce qu'**on ajoute en supplément des additifs courants, en particulier des stabilisants d'oxydation et/ou aux UV, des amines, des diamines ou des triamines et/ou des colorants.

6. Procédé suivant au moins l'une des revendications précédentes, **caractérisé en ce que** la mesure a) est contrôlée de façon à ce que la teneur en epsilon-caprolactame dans le polyamide 6 soit ajustée à moins de 7% en poids, en particulier à moins de 4% en poids.

7. Procédé suivant la revendication 6, **caractérisé en ce que** la teneur en epsilon-caprolactame est diminuée par des procédés d'extraction courants, en particulier par extraction à l'eau, ou par application d'une pression réduite.

8. Procédé suivant la revendication 7, **caractérisé en ce que** la teneur du polyamide 6 en epsilon-caprolactame est ajustée à moins de 0,5% en poids, en particulier à moins de 0,3% en poids.

9. Procédé suivant au moins l'une des revendications 1 à 5, **caractérisé en ce que**, au cours de la mesure 1b), la masse fondue d'un polyamide 6 est préparée et se présente dans un mélangeur dans lequel l'additif est ajouté de manière dosée, la mise en oeuvre d'une mesure d'extraction étant incluse.

10. Procédé suivant la revendication 9, **caractérisé en ce que**, comme mélangeur, on fait appel à une extrudeuse, en particulier une extrudeuse à deux vis.

11. Procédé suivant au moins l'une des revendications précédentes, **caractérisé en ce qu'**un polyamide 6 extrait est traité par extrusion à l'état fondu en fibres ou objets façonnés.

12. Procédé suivant la revendication 11, **caractérisé en ce que** la température de la masse fondue est ajustée à 210 jusqu'à 300°C, en particulier à 230 jusqu'à 260°C.

13. Procédé suivant au moins l'une des revendications précédentes, **caractérisé en ce qu'**à la suite de la préparation du polyamide 6 selon la mesure a) vient en supplément encore un traitement selon la mesure b).

14. Polyamide 6, que l'on peut obtenir selon la mesure a) et au moins une des revendications 1 à 6, et **caractérisé par** une teneur en epsilon-caprolactame inférieure à 7% en poids, en particulier inférieure à 4% en poids.

15. Polyamide 6, que l'on peut obtenir selon la revendication 8, et **caractérisé par** une teneur en epsilon-caprolactame inférieure à 0,5 en particulier inférieure à 0,3% en poids.

16. Polyamide 6, que l'on peut obtenir suivant au moins une des revendications 9 à 13, et **caractérisé par** une teneur en epsilon-caprolactame inférieure à 0,5% en poids, en particulier inférieure à 0,3% en poids.

17. Utilisation du polyamide 6 selon la revendication 15, pour la préparation par extrusion à l'état fondu de produits ayant une teneur en epsilon-caprolactame inférieure à 0,5% en poids, en particulier inférieure à 0,3% en poids.

18. Utilisation du polyamide 6 selon la revendication 16, sous la forme de fibres, de matériaux fibreux ou d'objets façonnés.

19. Utilisation suivant la revendication 17 ou 18, selon laquelle les fibres ou objets façonnés sont préparés selon des procédés courants de l'extrusion à l'état fondu, à une température de traitement inférieure à 250°C.
